Europäisches Patentamt

European Patent Office

Office européen des brevets

(11) Publication number: **0 087 216**

**B1**

(12) **EUROPEAN PATENT SPECIFICATION**

(45) Date of publication of patent specification: **26.06.85**

(51) Int. Cl.⁴: **B 60 T 15/04**

(21) Application number: **83300317.1**

(22) Date of filing: **21.01.83**

(54) **Improvements in and relating to control valves.**

(30) Priority: **22.01.82 GB 8201817**

(43) Date of publication of application:
**31.08.83 Bulletin 83/35**

(45) Publication of the grant of the patent:
**26.06.85 Bulletin 85/26**

(84) Designated Contracting States:
**DE GB SE**

(56) References cited:
**DE-A-2 742 023**
**GB-A-1 466 296**
**US-A-3 992 065**

(73) Proprietor: **CLAYTON DEWANDRE COMPANY LIMITED**
**P.O. Box 9 Titanic Works**
**Lincoln, LN5 7JL (GB)**

(72) Inventor: **Coupland, Ralph**
**60 Pennell Street**
**Lincoln (GB)**
Inventor: **Baines, Robert**
**4 Somerset Close Stow**
**Lincoln (GB)**

(74) Representative: **Hartley, David et al**
**c/o Withers & Rogers 4 Dyer's Buildings Holborn**
**London, EC1N 2JT (GB)**

Courier Press, Leamington Spa, England.

## Description

This invention relates to control valves and, in particular, to dual concentric brake valves of the kind described in our earlier British Patent Specification No. GB—A—1 466 296 for use in fluid-pressure operated vehicle braking systems embodying two independent braking circuits.

The dual concentric brake valve referred to above comprises a housing, two sets of ports therein each including an inlet port and a delivery port, and two co-axial valve assemblies associated respectively with two sets of ports, the valve assemblies each comprising a poppet type valve element, the head of which is subject to delivery pressure, which pressure also acts on an oppositely directed face of the valve element such that the fluid pressure across the valve element is balanced. An axial exhaust passage is provided in part by a tubular member located co-axially between the valve assemblies by a diaphragm or equivalent means, which is also subjected to delivery pressure on both sides thereof. The valve has an axially-displaceable thrust member adapted to be actuated by a foot pedal. A sleeve like seating structure is slidably mounted in the housing or, at its lower end, has an inwardly directed flange formed on its upper side with an annular seat engagable by the head of the (rubber faced) poppet-type inlet valve element. This valve element has a sliding fit on a stem of a piston-like member which is clamped within the seating structure for movement therewith, a travel or transmission spring means or assembly being interposed between the piston member and the thrust member, and through which the thrust of the foot pedal is transmitted to the combined piston/seating structure.

Friction, the inlet/exhaust valve rubber indentation and the valve head loads are among the valve parameters which contribute to travel hysteresis within the valve. Although in the valve referred to, the effect of these parameters have been reduced as compared with previously known valves by using improved surface finishes, reduced valve rubber thicknesses and minimum valve head loads consistent with no air leakage, the cumulative effect of these parameters is still considered to be excessive.

An object of this invention is to reduce travel hysteresis not only in valves of the kind referred to, but, more generally, in any control valve in which the operating effort is applied to control elements of the valve via a transmission spring assembly.

According to this invention a control valve, in a preferred embodiment a brake control valve for a fluid pressure operated vehicle braking system, in which the operating effort is applied to a control element of the valve via a travel or transmission spring assembly, is characterised in that friction means are provided to generate a predetermined friction load in that friction means are provided whereby a part of the operating effort is applied directly to the control element so as to reduce travel of the spring or springs in the assembly.

The transmission spring or springs may, as in conventional travel or transmission spring assemblies, be held between the control element and a spring retaining element, by a tie rod received in a bore of the control element, and we propose inserting friction rings or the like to oppose or resist movement of the rod in the bore. These friction rings may be fitted either on the rod or in the bore.

A substantially constant friction load can be generated when metal friction rings are made to bear upon a plastics surface and in the preferred embodiment, the head of the tie rod carries steel friction rings and at least that part of the control element defining the bore in which the head of the tie rod is received, is formed of plastics material.

By introducing a positive friction between the transmission springs and the valve control element, travel hysteresis is improved and can be made constant over the range of travel without affecting other aspects of performance such as leakage and load hysteresis.

Embodiments of the invention will now be described by way of example with reference to the accompanying drawings, of which:

Figure 1 is a cross-sectional view of a dual concentric brake valve;

Figure 2 is a cross-section of a detail of another embodiment of dual concentric brake valve according to the present invention; and

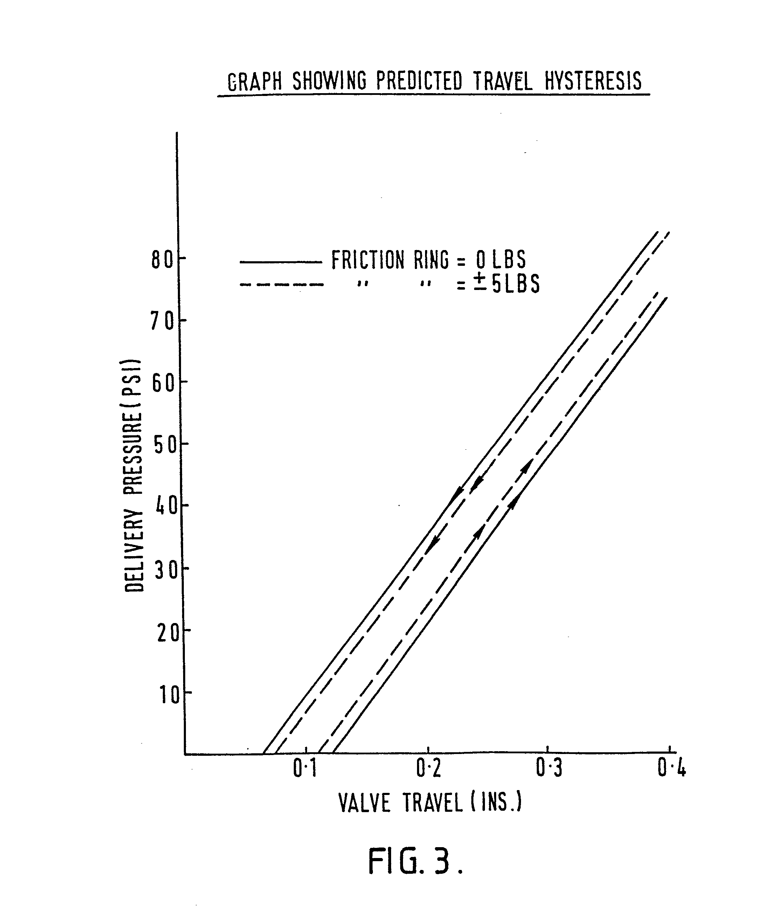

Figure 3 is a graph showing the variation in delivery pressure with valve travel for a typical dual concentric valve with (a) and without (b) friction loading.

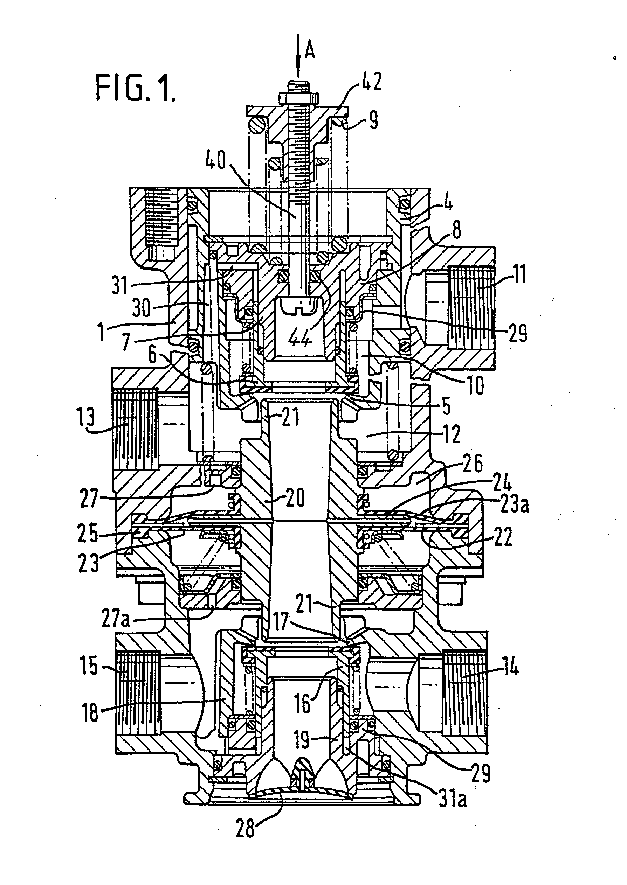

The valve shown in Figure 1 is adapted to be actuated by a foot pedal (not shown) as indicated by the arrow A. Having a sealed sliding fit in the upper end of the housing 1 is a control element comprising a sleeve-like seating structure 4, the lower end of which has an inwardly-directed flange formed on its upper side with an annular seat 5, engageable by the head of a rubber-faced poppet-type inlet valve element 6. The valve element 6 has a sliding fit on a stem 7 of a piston-like member 8 which is clamped within the seating structure for movement therewith, a travel spring assembly 9 being interposed between the piston member 8 and a thrust member through which the thrust of the foot pedal is transmitted to the combined piston/seating structure 4, 5. The space 10 above the annular seat 5 communicates with an inlet port 11 in the housing wall whilst the space 12 below said seat communicates with a delivery port 13 in said wall, these ports being associated with one of the braking circuits. At the lower end of the housing there is a second inlet valve assembly of similar construction controlling communication between an inlet port 14 and a delivery port 15 connected into the second braking circuit, the head of the valve element 16 in this instance engaging a seat 17 on the upper end of a seating structure 18 which is fixed, preferably by forming it integral with the housing. The valve element 16 slides upon a tubular guide 19 which is secured within the lower part of the housing structure.

Located between the two valve assemblies is a co-axially disposed tubular structure 20 the ends of which constitute annular exhaust valve elements 21 and co-act respectively with the heads of inlet valves 6, 16 on a smaller diameter than does the inlet valve seats 5, 17. Attached to the exhaust valve structure at its mid point and located thereby is an annular diaphragm assembly 22 which is secured at its periphery to the housing, e.g. by forming the housing in two parts and clamping the diaphragm assembly between them. Preferably, the diaphragm assembly consists of two annular diaphragms 23, 23a spaced by a flange 24 on the exhaust valve structure 20, the space between the diaphragms being vented to the interior of said structure through a passage 25 in the flange 24 in order to detect a diaphragm failure. The diaphragm assembly is disposed in a chamber 26 formed in the housing, the spaces at opposite sides of said assembly communicating respectively and by passages 27, 27a in the housing with the two delivery ports 13, 15.

The bores of the exhaust valve structure 20, of the lower inlet valve 16 and of its tubular guide 19 form collectively an axial exhaust passage in permanent communication at its lower end with atmosphere via a check valve 28.

Normally, the heads of the inlet valves 6, 16 engage their seats 5, 17 but are spaced from the exhaust valve elements 21 whereby the inlet ports 11, 14 are sealed off but the delivery ports 13, 15 are in communication with the axial exhaust passage. Depression of the foot pedal acting through the travel spring assembly 9 displaces the combined piston and seating structure 4, 8 taking with it the upper inlet valve 6 which is spring loaded on to its seat 5. This inlet valve 6 then engages the tubular exhaust structure and displaced it into engagement with the lower inlet valve 16. The tubular exhaust structure 20 is disposed between adjacent ends of the valves 6 and 16 and thereby in operation acts as a thrust member transmitting force between valve 6 and valve 16. Thus the axial exhaust passage is shut off from both delivery ports and upon continued depression of the foot pedal the seat 5 at the upper end of the housing moves away from the associated inlet valve 6 whilst at the lower end of the housing, the inlet valve 16 is moved off its co-acting seat 17 by the displaced exhaust valve structure whereby both inlet ports are then connected to their related delivery ports and air under pressure is conducted to the brakes.

In accordance with the present invention, however, positive friction is introduced between the transmission springs 9 and the sleeve like seating structure 4 by inserting, within the piston like member 8, a friction ring 44 which bears upon a tie rod 40, in this embodiment a bolt, passing through the piston-like member 8 and carrying, at its upper end, a transmission spring retaining plate 42.

When load is applied to the retaining plate 42 by the axially-displaceable thrust member (actuated by a foot pedal), the transmission springs 9 are compressed to an extent depending upon the applied load, but some load is transmitted directly to the piston-like member 8 and hence also the sleeve-like seating structure 4, by the friction ring. This has the result that the transmission spring is compressed less that it would be otherwise and, consequently, the travel in the compression spring is reduced.

On the exhaust cycle, accepting that the air load beneath the valve carrier piston 8 is the transmission load, then some load is transmitted through the friction ring 44, directly to the foot. The transmission spring will have less work to do and therefore less travel.

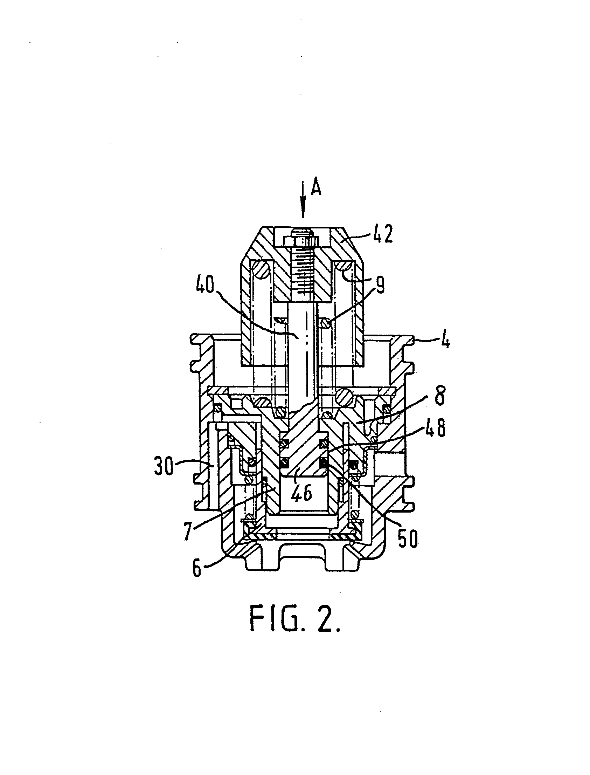

The embodiment of Figure 2 differs from the embodiment of Figure 1, in that the head 46 of the tie rod 40 runs in a parallel bore 48 of the stem 7 of the piston-like member 8 and is fitted with spaced friction rings 50 resisting relative movement of the tie rod 40 and piston-like member, and hence also travel of the springs 9.

Advantageously, the piston-like member 8 which is clamped within the sleeve-like seating structure 4, is formed of plastics material and the friction ring or rings (44, 50) are of steel since steel rings running in a plastics bore generate constant friction.

The accompanying graph in which delivery pressure (psi) of a typical dual concentric brake valve is plotted against valve travel (ins.), illustrates how the travel hysteresis is improved by fitting a friction ring producing a friction load of ±5lbf, as compared with a zero friction load.

It will be understood by those skilled in the art that for a given construction, incorporating friction rings as described above, a desired predetermined friction load can be produced by appropriate selection or adjustment of the preload in the fitted transmission spring or springs. Clearly, if the friction load were to be increased to exceed the spring load, there would be no spring travel and thus no travel hysteresis.

**Claims**

1. A control valve in which the operating effort is applied to a control element (4, 8) of the valve via a travel or transmission spring assembly (9) characterised in that friction means (44, 50) are provided to generate a predetermined friction load whereby a part of the operating effort is applied directly to the control element (4, 8) so as to reduce travel of the spring or springs (9).

2. A valve according to claim 1 wherein the transmission spring assembly comprises one or more springs (9) which bear upon the control element (4, 8) and are held between the control element (4, 8) and a spring retaining element (42) by a tie rod (40) received in a bore of the control element (4, 8), relative sliding movement of the rod (40) and the control element (48) being opposed by the positive friction means (44, 50).

3. A valve according to claim 2 wherein one or more friction rings (44, 50) are fitted either on the rod (40) or in the bore.

4. A valve according to claim 2 wherein at least that part (8) of the control element (4, 8) defining the bore is formed of plastics material, the positive friction means (44, 50) comprising one or more metal friction rings fitted either on the rod (40) or in the bore.

5. A valve according to any one of the preceding claims, which valve is a brake control valve for a fluid pressure operated vehicle braking system.

## Revendications

1. Soupape de commande dans laquelle un effort d'actionnement est appliqué à une organe de commande (4, 8) de la soupape via un ensemble ressort (9) de déplacement ou de transmission, caractérisée en ce que des moyens de frottement (44, 50) sont prévus de manière à engendrer une charge de frottement prédéterminée, grâce à quoi une partie de l'effort d'actionnement est appliquée directement à l'organe de commande (4, 8) de manière à réduire le trajet de déplacement du ressort ou des ressorts (9).

2. Soupape selon la revendication 1 dans laquelle l'ensemble ressort de transmission comprend un ou plusieurs ressorts (9) qui portent contre l'organe de commande (4, 8) et sont maintenus entre l'organe de commande (4, 8) et un organe de retenue (42) du ressort au moyen d'un tirant (40) reçu dans un alésage de l'organe de commande (4, 8), le mouvement de glissement relatif du tirant (40) et de l'organe de commande (48) étant contré par des moyens positifs de frottement (44, 50).

3. Soupape selon la revendication 2 dans laquelle une ou plusieurs bagues de frottement (44, 50) sont ajustées soit sur le tirant (40), soit dans l'alésage.

4. Soupape selon la revendication 2 dans laquelle au moins cette partie (8) de l'organe de commande (4, 8) définissant l'alésage est constituée en une matière plastique, les moyens de frottement positifs (44, 50) comprenant une ou plusieurs bagues de frottement métalliques ajustées soit sur le tirant (40), soit dans l'alésage.

5. Soupape selon l'une quelconque des revendications précédentes, laquelle soupape set une soupape de commande de frein pour un système de freinage de véhicule actionné par une pression de fluide.

## Patentansprüche

1. Steuerventil dessen Betätigungskraft einem Steuerelement des Ventiles über eine Stell- und Übertragungsfederanordnung (9) zugeführt wird, dadurch gekennzeichnet, daß Reibungsmittel (44, 50) vorgesehen sind, um eine vorbestimmte Reibungskraft zu erzeugen, wobei ein Teil der Betätigungskraft mit Steuerelementen (4, 8) direkt zugeführt wird, um die Verstellung der Feder bzw. Federn (9) zu verringern.

2. Ventil nach Anspruch 1, bei dem die Übertragungsfederanordnung eine oder mehrere Federn (9) aufweist die auf das Steuerelement (4, 8) einwirkt bzw. einwirken und zwischen dem Steuerelement (4, 8) und einem Federanschlag (42) mittels einer Verbindungsstange (40) gehalten ist bzw. sind, die in einer Bohrung des Steuerelementes (4, 8) geführt ist, wobei relative Verstellbewegungen zwischen der Stange (40) und dem Steuerelement (4, 8) dem positiven Reibungsmittel (44, 50) entgegenwirken.

3. Ventil nach Anspruch 2 bei dem ein Reibring oder mehrere Reibringe (44, 50) entweder auf der Stange (40) oder in der Bohrung angeordnet ist bzw. sind.

4. Ventil nach Anspruch 2 bei dem zumindest der Teil (8) des Steuerelementes (4, 8), der die Bohrung umschießt, aus Plastikmaterial besteht und das positive Reibmittel (44, 50) einen oder mehrere Reibringe aus Metall entweder auf der Stange (40) oder in der Bohrung aufweist.

5. Ventil nach einem der vorhergehenden Ansprüche, das ein Bremsensteuerventil für ein fluiddruckbetätigtes Fahrzeugbremmssystem ist.

FIG. 1.

FIG. 2.

GRAPH SHOWING PREDICTED TRAVEL HYSTERESIS

FIG. 3.